Europäisches Patentamt

European Patent Office

Office européen des brevets

(19)

(11) Publication number: **0 035 498**
**B1**

(12) # EUROPEAN PATENT SPECIFICATION

(45) Date of publication of patent specification: **12.09.84**

(21) Application number: **80900605.9**

(22) Date of filing: **11.04.80**

(86) International application number:
**PCT/GB80/00065**

(87) International publication number:
**WO 80/02119 16.10.80 Gazette 80/23**

(51) Int. Cl.³: **B 04 B 9/06,** B 04 B 9/12,
F 16 N 39/06

(54) **CENTRIFUGAL SEPARATOR.**

(30) Priority: **12.04.79 GB 7912939**

(43) Date of publication of application:
**16.09.81 Bulletin 81/37**

(45) Publication of the grant of the patent:
**12.09.84 Bulletin 84/37**

(84) Designated Contracting States:
**AT CH DE FR LI NL SE**

(56) References cited:
**FR-A-1 063 362**
**GB-A- 723 339**
**GB-A-1 035 542**
**GB-A-1 036 661**
**GB-A-1 053 804**
**GB-A-1 532 409**
**US-A-2 865 562**
**US-A-4 106 689**

(73) Proprietor: **AE PLC**
**Cawston House Cawston**
**Rugby Warwickshire CV22 7SA (GB)**

(72) Inventor: **BEAZLEY, Rodney T.**
**Downderry, 19 Lancet Lane Loose**
**Maidstone Kent (GB)**
Inventor: **HAGGETT, Mervyn T.**
**Thistledovine, Bush Place**
**Langport, Somerset (GB)**

(74) Representative: **Thomas, Roger Tamlyn et al**
**D. Young & Co. 10 Staple Inn**
**London WC1V 7RD (GB)**

Courier Press, Leamington Spa, England.

## Description

This invention relates to centrifugal separators for separating contaminants from contaminated fluids, and particularly for extracting solid matter from oil or other fluids or for separating a heavier fluid from a lighter fluid (for example, water from fuel oil). Such separators include a rotatable drum through which fluid is fed so that during the period when a part of the fluid remains in the drum it is subjected to centrifugal action caused by the rotation. This causes solid matter in the fluid or the heavier of the two fluids to be separated and be retained around the circumferential wall of the drum while the "cleaned" fluid is taken to where it is required for use. The drum is provided with one or more outlet nozzles through which fluid leaves the interior of the drum, the fluid issuing from the nozzles with a substantially tangential component with respect to the drum whereby the drum is caused to rotate by the reaction of the jets of fluid issuing from the nozzles. Subsequently such a centrifugal separator will be referred to as of the kind described.

The invention is particularly concerned to make improvements in centrifugal separators of the kind described such that the separator is a low cost product which may be disposed of in its entirety and replaced with a new unit. Conventional centrifugal separators of the kind described must be dismantled for cleaning out the drum when it is approaching full and this is not only tedious and dirty but involves a relatively expensive construction of drum capable of being repeatedly readily opened up for cleaning and readily reassembled with tightly sealed joints.

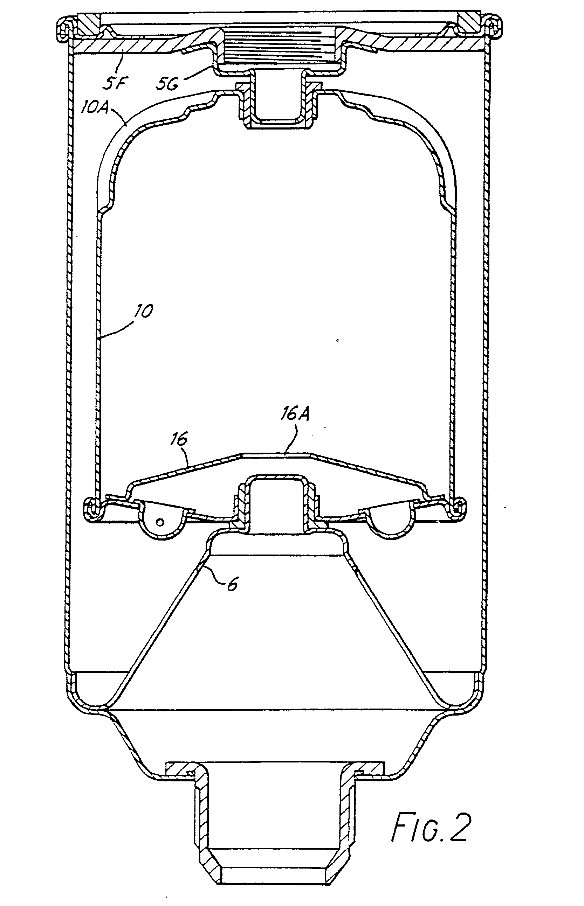

Centrifual separators have previously been proposed which do not act as mechanical strainers but rather remove contaminants from the fluid by centrifuging, so overcoming these disadvantages. For example, such a filter is shown in GB Patent No. 1 089 355 in the name of The Glacier Metal Company Limited. In this filter there is a hollow drum or rotor which is rotatably mounted on a spindle. The spindle which extends through the rotor has axial passageways which conduct oil into the interior of the rotor. In Figure 2 of the patent, a heavy cast base is shown with a close fitting outer casing spigotted on. In addition the rotor is a casting of considerable complication.

While centrifugal filters have an undoubtably superior performance to element type filters the need to be cleaned out has up till now necessitated a complicated construction with relatively heavy machined castings so that it will stand up to periodic cleaning to remove the sludge built up. This has probably militated against the more universal use of centrifugal filters in engines. It has also not been possible to provide a warning system to show that the rotor is full which further complicates the problem of maintenance.

The invention in its preferred forms provides a centrifugal separator which is wholly disposable after the vehicle has done a certain mileage and which is very similar as regards external appearance and fitting and size to a conventional automotive spin-on engine block canister filter. To be wholly disposable the separator should be of simple and low cost construction avoiding expensive machined parts and the total number of parts should be kept to a minimum. It should also be resistant to "opening up" to prevent unauthorised attempts to clean out or reclaim the separator.

Such a disposable centrifugal separator in conformity with the preamble of claim 1 is described in United States Patent 4 106 689 (Kozulla) and the present invention is concerned with improvements in such centrifugal separators.

According to the invention, there is provided a disposable centrifugal separator for separating contaminants from oil used for lubricating an engine, said separator comprising shroud means defining a first chamber, bearing means within the shroud means, a hollow rotor rotatably carried by the bearing means, said hollow rotor defining a second chamber for receiving contaminated oil, inlet part means in said shroud means which port means is aligned with said bearing means and arranged to form a releasable connection with said engine, an inlet passage passing through said bearing means and connecting said inlet port means and said second chamber, means to rotate said rotor and thereby cause contaminants in the contaminated oil within said second chamber to migrate towards the side wall of said second chamber under the influence of centrifugal force and to be separated from such contaminated oil, said means to rotate said rotor comprising outlet reaction port means on said rotor in fluid communication with said second chamber to cause said rotor to rotate upon discharge of fluid from said second chamber to said first chamber, partition means in said second chamber adjacent said outlet port reaction means dividing said second chamber into a centrifuging chamber and an outlet port chamber, said centrifuging chamber and said outlet port chamber being interconnected adjacent the rotary axis of the rotor, and outlet port means at the lower end of said shroud means for discharging fluid from said first chamber, said outlet port means being arranged to form a releasable connection with said engine, characterised in that said bearing means comprises a spider secured within the shroud means in the bottom region thereof.

Thus the bearing means includes a spider secured in the bottom region of the shroud. This spider may provide a baffle for oil leaving the nozzles and proceeding out of the shroud whereby the rotor may reach as high a speed as possible without drag being caused by oil entering the annular space between the rotor and the shroud. Also, to reduce or obviate this drag problem, it is desirable to provide a deep sump below the rotor. The size of this sump may be defined in a number of ways; for example it is desirably at least 40 mm deep. It is also desirable that the rotor has a volume no greater than two thirds that of the shroud.

It is desirable that simplified (compared to US—A—4 106 689) provision be made for keeping centrifuged sludge out of the nozzle chamber and for this reason the partition means preferably slopes downwardly in the radially outward direction. It is also desirable that the outer, lower, portion of said partition means cooperates with said side wall to provide a peripheral channel at the lower end of said centrifuging chamber.

As indicated above it has also been found to be advantageous to mount the rotor on stub axles extending between the shroud and the rotor. Generally the stub axles are non-rotating; however if desired they could be carried by and rotate with the rotor. For example, the separator may comprise a shroud and rotor of sheet metal having aligned openings at one end, the edges of which are shaped to form in combination a bearing and journal for relative rotation. Thus the stub axles assembly remote from the nozzles may be formed by pressing out a lipped aperture in the shroud which forms a stub axle cooperating with a lipped aperture in the rotor. Alternatively, apertures in the shroud and rotor may be joined by a simple stub axles.

Similarly a lower bearing journal may be formed by pressing out an aperture in the nozzle plate of the rotor.

Embodiments of the invention will now be described by way of example with reference to the accompanying diagrammatic drawings in which:

Fig. 1 is a part-sectioned elevation of one form of centrifugal separator according to the invention which is intended for use as an oil cleaner for a motor vehicle;

Fig. 2 is a vertical section through another form of a centrifugal separator according to the invention; and

Fig. 3 is a vertical section through a third form of a centrifugal separator according to the invention.

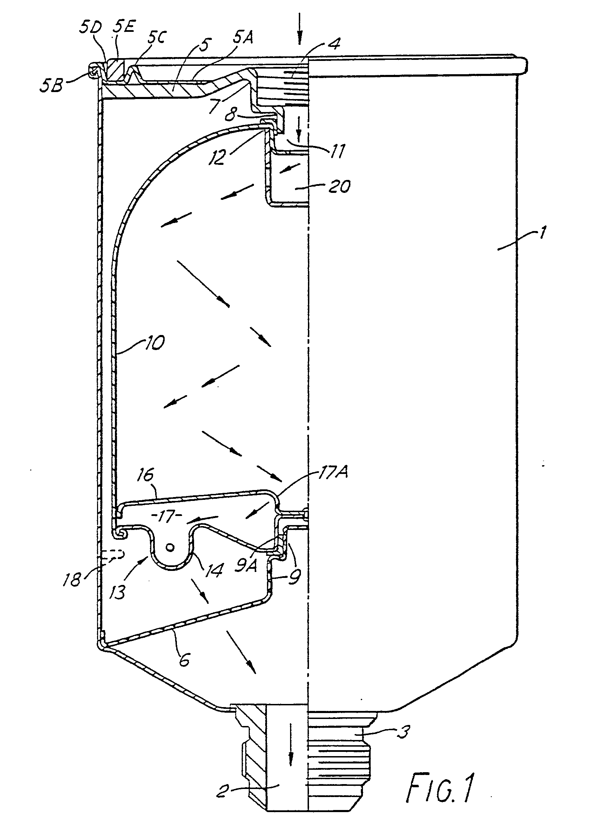

Fig. 1 shows a particular stub axle construction in which sheet metal lips on a canister forming the rotor cooperate with lips on a canister forming the shroud means.

Referring now in more detail to Figure 1 there is shown a pressed out sheet metal outer canister 1 having a union 3 providing an oil outlet 2 from which oil is led away from the separator to the engine via a flexible oil return pipe (not shown). The outer canister 1 comprises four simple sheet metal pressings, viz the body of the canister 1, the top closure 5, the top closure support ring 5A and a rotor support cage 6, all being joined together e.g. by the sheet metal rolled-overjoint technique or by simple welding. As shown, the top closure support ring 5A is connected to the body of the canister 5 by a rolled-over-joint 5B and has an annular upward projection 5C providing an annular groove 5D housing an annular resilient seatl 5E. The top closure 5 has a screw-threaded opening 7 with a downturned extended lip 8, the opening 7 providing an oil inlet unit 4 so that the whole centrifugal separator unit screws onto a boss on the engine in the same way as the spin-on element filter conventionally used. The rotor support spider 6 attached to the inner surface of the canister 1 is provided with an upturned lip 9. The lips 8 and 9 thus form stub axles for the rotor.

The rotor 10 is a simple pressed-out canister having an aperture 11 to communicate with the oil inlet and also having a lip 12 which cooperates with the lip 8 to form a rotary bearing and a thrust bearing. Since lubrication is available from the oil the rotor canister may normally run around (or inside) the lip 8 with steel-to-steel contact without the necessity of providing a separate bearing. However, an L-section ring of low-friction bearing material may be provided as shown. The adequacy of the bearing arrangement will to a large extent depend on the number of revolutions the rotor is required to undertake before the rotor becomes full of dirt. Similarly, the lower end of the rotor canister is provided by a pressed out plate 13 which includes two pressed out nozzle outlets 14 (only one of which is shown). The lip 9 on the support spider 6 forms a bearing surface to run against an upturned rim 9A in the plate 13. Finally a further plate 16 spaced apart from the nozzle plate 13 provides a chamber 17 into which oil passes before entering the driving nozzles 14 and 15 to drive the rotor. This oil leaves the separator via the outlet 2 after passing through the rotor support spider 6.

Since the rotor canister 10 is required to rotate at its maximum speed for effective separation and needs to occupy the outer canister volume as fully as possible there is a tendency for oil leaving the rotor canister 10 to be driven up the relatively narrow clearance between the concentric walls of the rotor canister 10 and the outer canister 1. The rotor support spider 6, if suitably apertured or shaped, may constrain oil proceeding in this direction while not at the same time providing a restriction to free downward flow or oil. A small lip 18 may also prove effective in this respect. An oil inlet directing chamber 20 also of pressed-out sheet metal construction may be pressed over or otherwise fixed to lip 12 over the upper aperture 11 in the rotor 10, so that the oil will enter through the outer canister 1 as shown by the arrows and then be directed through a series of radial apertures in the wall of the chamber 20 towards the outside of the rotor 10. The arrows show how the oil is first directed towards the outer wall of the rotor 10 and is prevented from passing directly into the nozzle chamber 17 by the formed nozzle plate 16 before experiencing the necessary dwell time in the rotor so that efficient dirt separation can take place. It will also be noted that the oil, before entering the nozzle chamber 17, has to migrate towards the axis of rotation before turning into the nozzle chamber 17 via holes 17A as shown by the arrows.

It is to be noted that here there is no spindle extending through the rotor; such a spindle is present in all conventional centrifugal separators of the kind described and directs the oil flow into the rotor. It has now been found that sufficient dwell time can surprisingly be obtained without the need of a spindle extending through the rotor. It is sufficient for the oil to turn towards the outer wall of the rotor at the inlet and to turn away from the wall before it enters the nozzle chamber. The omission of a through spindle drastically reduces the cost of the assembly and eases "permanent" joining of the rotor canister and outer canister so that it cannot be tampered with and leaves more space for oil in the rotor.

Figure 2 is similar to Figure 1 and only differences will be described. These are as follows:—

1. The oil inlet chamber 20 is omitted; as mentioned previously it is optional in all embodiments of the invention.

2. The top closure 5 is made in two parts 5F and 5G.

3. The rotor canister 10 has strengthening ribs 10A at the top corner.

4. The plate 16 is simplified and has an axial opening 16A.

5. Lastly, and most importantly, the spider 6 is axially lengthened to provide a deep sump at the lower end of canister 1.

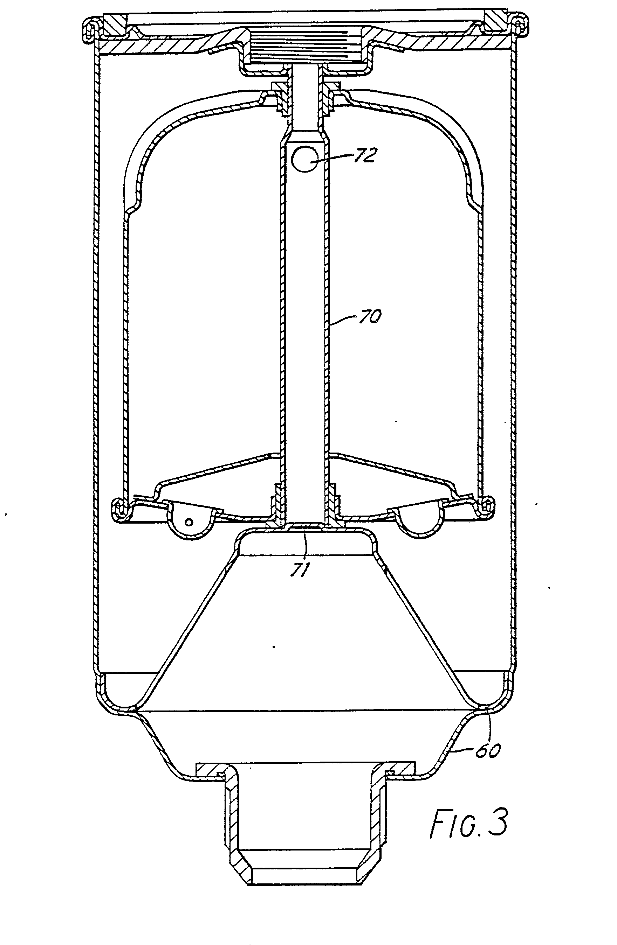

Figure 3 differs from Figure 2 in that lip 8 is extended to form a full length hollow spindle 70 fitting over a slight projection 71 on spider 6. Oil enters the inner canister 10 through one or more lateral openings 72 in the spindle 70. Although a continuous spindle adds to costs it obviates any problems which might arise due to misalignment of the stub axles.

In all embodiments of the invention, it may be desirable to provide a pressure relief valve in the upper part of the outer canister to release excess air pressure to atmosphere.

The following modifications of the Fig. 1 embodiment may also be advantageous;

(a) the provision of a horizontal annular oil deflector plate extending outwards from the base of chamber 20 e.g. to approximately half the radius of the rotor.

(b) the provision of a solid spigot or stub shaft at the lower bearing point.

(c) heat-hardening of bearing surfaces provided by pressed metal.

Desirably the spinning rotor should be in vertical equilibrium so that there is little or no resultant force acting on the upper or lower thrust bearings. In the Fig. 1 embodiment this may be aided by providing a bleed opening in the centre of the lower rotor wall to connect the main rotor chamber with the space above the lower stub axle or spigot. Such a bleed arrangement, besides effecting some measure of pressure balancing, will also facilitate lubrication of the lower bearing.

It will be noted that in all the embodiments of the invention the bearings provided by the outer canister are rigid and not spring loaded.

The deep sump arrangements shown in Figs. 2 and 3 have the advantage that any oil build up is unlikely to get near the nozzles or the periphery of the rotor. Arrangements with gauzes have been proposed to solve this problem but they impeded oil flow.

## Claims

1. A disposable centrifugal separator for separating contaminants from oil used for lubricating an engine, said separator comprising shroud means (1) defining a first chamber, bearing means (8, 9) within the shroud means, a hollow rotor (10) rotatably carried by the bearing means, said hollow rotor defining a second chamber for receiving contaminated oil, inlet port means (4) in said shroud means which port means is aligned with said bearing means and arranged to form a releasable connection with said engine, an inlet passage (11) passing through said bearing means and connecting said inlet port means and said second chamber, means to rotate said rotor and thereby cause contaminants in the contaminated oil within said second chamber to migrate towards the side wall of said second chamber under the influence of centrifugal force and to be separated from such contaminated oil, said means to rotate said rotor comprising outlet reaction port means (14) on said rotor in fluid communication with said second chamber to cause said rotor to rotate upon discharge of fluid from said second chamber to said first chamber, partition means (16) in said second chamber adjacent said outlet port reaction means dividing said second chamber into a centrifuging chamber and an outlet port chamber (17), said centrifuging chamber and said outlet port chamber being interconnected adjacent the rotary axis of the rotor, and outlet port means (2) at the lower end of said shroud means for discharging fluid from said first chamber, said outlet port means being arranged to form a releasable connection with said engine, characterised in that said bearing means comprises a spider (6) secured within the shroud means in the bottom region thereof.

2. A centrifugal separator according to claim 1 characterised in that said partition means (16) slopes downwardly in the radially outward direction.

3. A centrifugal separator according to claim 2, characterised in that the outer, lower, portion of said partition means (16) cooperates with said side wall to provide a peripheral channel at the lower end of said centrifuging chamber.

4. A centrifugal separator according to claim 1, 2 or 3, wherein the bearing means (8, 9) comprises two separate axially aligned stub axles.

5. A centrifugal separator according to claim 4, wherein the stub axles (8, 9) are fixedly mounted at the respective ends of the shroud means (1) and wherein the rotor (10) has annular recesses at its respective ends, said recesses being journalled on said stub axles.

6. A centrifugal separator according to claim 4 or 5, wherein the stub axles (8, 9) are of sheet metal.

7. A centrifugal separator according to claim 6 wherein the bearings are formed by direct sheet metal to sheet metal engagement.

8. A centrifugal separator according to any preceding claim, characterised in that an annular ledge (60) is formed in the bottom region of the first chamber, the axial distance between the reaction port means (14) and the uppermost part of the ledge being at least 40 mm.

9. A centrifugal separator according to any preceding claim, characterised in that the reaction port means (14) are spaced from the lower end of the first chamber such that the second chamber has a volume no greater than two thirds that of the first chamber.

## Revendications

1. Séparateur centrifuge à jeter pour la séparation d'impuretés d'avec une huile de lubrification de moteur usée, ledit séparateur comprenant un moyen d'enveloppement (1) définissant une première chambre, des moyens formant palier (8, 9) situés dans le moyen d'enveloppement, un rotor creux (10) tourillonnant sur les moyens formant palier, ledit rotor creux définissant une seconde chambre de réception de l'huile impure, un moyen formant orifice d'entrée prévu dans ledit moyen d'enveloppement lequel moyen formant orifice est aligné avec lesdits moyens formant palier et agencé pour assurer un raccordement amovible avec ledit moteur, un passage d'admission (11) traversant lesdits moyens formant palier et reliant ledit moyen formant orifice d'entrée et ladite seconde chambre, des moyens pour entraîner en rotation ledit rotor et amener par là les impuretés présentes dans l'huile impure située dans ladite seconde chambre à migrer vers la paroi latérale de ladite seconde chambre sous l'effet de la force centrifuge et à se séparer de cette huile impure, lesdits moyens d'entraînement en rotation dudit rotor comprenant des moyens formant orifice de réaction de sortie (14) prévus sur ledit rotor en communication avec ladite seconde chambre pour provoquer la rotation dudit rotor lors de l'évacuation de liquide de ladite seconde chambre dans ladite première chambre, des moyens de cloisonnement (16) prévus dans ladite seconde chambre, près desdits moyens de réaction formant orifice de sortie, divisant ladite seconde chambre en une chambre de centrifugation et une chambre à orifice de sortie (17), ladite chambre de centrifugation et ladite chambre à orifice de sortie étant reliées entre elles près de l'axe de rotation du rotor, et des moyens formant orifice de sortie (2) situés à l'extrémité inférieure dudit moyen d'enveloppement pour évacuer du liquide de ladite première chambre, lesdits moyens formant orifice de sortie étant agencés pour assurer un raccordement temporaire avec ledit moteur, caractérisé en ce que lesdits moyens formant palier sont constitués par un croisillon (6) fixé à l'intérieur du moyen d'enveloppement dans la région basse de celui-ci.

2. Séparateur centrifuge selon la revendication 1 caractérisé en ce que lesdits moyens de cloisonnement (16) s'inclinent vers le bas radialement vers l'extérieur.

3. Séparateur centrifuge selon la revendication 2, caractérisé en ce que la partie basse extérieure desdits moyens de cloisonnement (16) coopère avec ladite paroi latérale pour ménager une gouttière périphérique à l'extrémité inférieure de ladite chambre de centrifugation.

4. Séparateur centrifuge selon la revendication 1, 2 ou 3, caractérisé en ce que les moyens formant palier (8, 9) comprennent deux tourillons axialement alignés séparés.

5. Séparateur centrifuge selon la revendication 4, caractérisé en ce que les tourillons (8, 9) sont montés fixés aux extrémités respectives du moyen d'enveloppement (1) et en ce que le rotor (10) présente des évidements annulaires à ses extrémités respectives, lesdits évidements tourillonnant sur lesdits tourillons.

6. Séparateur centrifuge selon la revendication 4 ou 5, caractérisé en ce que les tourillons (8, 9) sont en tôle.

7. Séparateur centrifuge selon la revendication 6 caractérisé en ce que les paliers sont formés par contact direct tôle-tôle.

8. Séparateur centrifuge selon l'une quelconque des revendications précédentes, caractérisé en ce qu'une console annulaire (60) est formée dans la région basse de la première chambre, la distance axiale entre les moyens formant orifice de réaction (14) et la partie la plus haute de la console étant d'au moins 40 mm.

9. Séparateur centrifuge selon l'une quelconque des revendications précédentes, caractérisé en ce que les moyens formant orifice de réaction (14) sont espacés de l'extrémité inférieure de la première chambre en sorte que la seconde chambre ait un volume non supérieur aux deux tiers de celui de la première chambre.

## Patentansprüche

1. Wegwerfbare Trennzentrifuge zur Abtrennung von Verunreinigungen aus zum Schmieren eines Motors verwendetem Öl, wobei die Trenneinrichtung eine eine erste Kammer definierende Wandung (1), Auflager (8, 9) innerhalb der Wandung, einen von den Auflagern drehbar getragenen hohlen Rotor (10), wobei dieser hohle Rotor eine zweite Kammer zur Aufnahme von verunreinigtem Öl definiert, eine Einlaßöffnung (4) in der Wandung, wobei diese Einlaßöffnung mit den Auflagern fluchtet und so angeordnet ist, daß sie eine lösbare Verbindung mit dem Motor bildet, einen Einlaßdurchgang (11), der durch das Auflager geht und die Einlaßöffnung mit der zweiten Kammer verbindet, eine Einrichtung, die den Rotor dreht und dabei bewirkt, daß Verunreinigungen in dem verunreinigten Öl in der zweiten Kammer unter dem Einfluß der Zentrifugalkraft zu der Seitenwand dieser zwieten Kammer hin wandern und von solchem verunreinigtem Öl abgetrennt werden, wobei diese Einrichtungen zum Drehen des Rotors eine Auslaßgegendrucköffnung (14) an dem Rotor in Fließmittelverbindung mit der zweiten Kammer besitzen, um den Rotor zu veranlassen, beim Austritt von Fließmittel aus der zweiten Kammer in die erste Kammer sich zu drehen, eine Trennwand (16) in der zweiten Kammer nahe der Auslaßgegendrucköffnung, die die zwiete Kammer in eine Zentrifugierkammer und eine Auslaßöffnungskammer (17) teilt, wobei die Zentrifugierkammer und die Auslaßöffnungskammer nahe der Drehachse des Rotors miteinander verbunden sind, und eine Auslaßöffnung (2) am unteren Ende der Wandung für das Austreten von Fließmittel aus der ersten Kammer, wobei die Auslaßöffnung so angeordnet ist, daß sie einen lösbare Verbindung mit dem Motor bildet, besitzt, dadurch gekennzeichnet, daß die Auflager ein innerhalb der Wandung in deren Bodenbereich befestigtes Armkreuz (6) aufweisen.

2. Trennzentrifuge nach Anspruch 1, dadurch gekennzeichnet, daß die Trennwand (16) radial nach außen abwärts geneigt ist.

3. Trennzentrifuge nach Anspruch 2, dadurch gekennzeichnet, daß der äußere untere Teil dieser Trennwand (16) mit der Seitenwand zusammenwirkt, einen peripheren Kanal am unteren Ende der Zentrifugierkammer zu bilden.

4. Trennzentrifuge nach Anspruch 1, 2 oder 3, worin die Auflager (8, 9) zwei voneinander getrennte, axial fluchtende Achsschenkel besitzen.

5. Trennzentrifuge nach Anspruch 4, worin die Achsschenkel (8, 9) fest an den betreffenden Enden der Wandung (1) befestigt sind und worin der Rotor (10) an seinen jeweiligen Enden ringförmige Vertiefungen aufweist, in denen die Achsschenkel gelagert sind.

6. Trennzentrifuge nach Anspruch 4 oder 5, worin die Achsschenkel (8, 9) aus Metallblech bestehen.

7. Trennzentrifuge nach Anspruch 6, worin die Auflager durch direkte Berührung von Metallblech an Metallblech gebildet sind.

8. Trennzentrifuge nach einem der vorausgehenden Ansprüche, dadurch gekennzeichnet, daß im Bodenbereich der ersten Kammer eine ringförmige Verstärkungsleiste (60) ausgebildet ist, wobei der axiale Abstand zwischen der Gegendrucköffnung (14) und dem obersten Teil der Verstärkungsrippe wenigstens 40 mm ist.

9. Trennzentrifuge nach einem der vorausgehenden Ansprüche, dadurch gekennzeichnet, daß die Gegendrucköffnung (14) von dem unteren Ende der ersten Kammer einen solchen Abstand hat, daß die zweite Kammer kein größeres Volumen als zwei Drittel desjenigen der ersten Kammer hat.

FIG.1

FIG.2

FIG.3